# EUROPEAN PATENT APPLICATION

(11) **EP 4 354 671 A1**
(43) Date of publication of application: **17.04.2024**
(21) Application number: 22880154.4
(22) Date of filing: 27.09.2022
(51) Int. Cl.: H01R 13/52

(54) **ELECTRICAL CONNECTOR ASSEMBLY, BATTERY SWAPPING BASE, AND ELECTRICAL DEVICE**

(30) Priority: 13.10.2021 CN 202122465111 U
(71) Applicant: Contemporary Amperex Technology Co., Limited, Ningde, Fujian 352100 (CN)
(72) Inventor: YE, Qingfeng, Ningde, Fujian 352100 (CN); WU, Yuanhe, Ningde, Fujian 352100 (CN); CHEN, Disong, Ningde, Fujian 352100 (CN); SHUAI, Ling, Ningde, Fujian 352100 (CN); WANG, Kangyu, Ningde, Fujian 352100 (CN); WANG, Xia, Ningde, Fujian 352100 (CN); YANG, Xin, Ningde, Fujian 352100 (CN)
(74) Representative: Ziebig Hengelhaupt Intellectual Property Attorneys Patentanwaltskanzlei PartGmbB
(86) International application number: PCT/CN2022/121839
(87) International publication number: WO 2023/061214

(57) **Abstract**

Embodiments of this application provide an electrical connector assembly. The electrical connector assembly includes: an electrical connector body for docking with a battery, where the electrical connector body has a docking portion that docks with the battery; a shield portion capable of shielding the docking portion; and a driving means capable of driving the shield portion to shield the docking portion and driving the shield portion to leave the docking portion. According to the embodiments of this application, the electrical connector body can prevent, through shield of the shield portion, water or foreign matters from falling onto the docking portion of the electrical connector body during battery swapping which otherwise leads to short circuit or contamination of the electrical connector body.

## Description

### CROSS-REFERENCE TO RELATED APPLICATIONS

This application claims priority to Chinese patent application No. 202122465111.8, filed on October 13, 2021 and entitled "ELECTRICAL CONNECTOR ASSEMBLY AND BATTERY SWAPPING BASE", which is incorporated herein by reference in its entirety.

### TECHNICAL FIELD

This application relates to the field of battery swapping technologies, and in particular, to an electrical connector assembly, a battery swapping base, and an electric apparatus.

### BACKGROUND

In recent years, with the increasing popularization of electric vehicles, heavy-duty trucks requiring relatively large traction supply during operation have also begun to move toward the electric era. At present, in the field of battery swapping for electric heavy-duty trucks, battery boxes removed from the trucks can be swapped in dedicated battery swapping stations. With dedicated battery swapping apparatuses, battery boxes are removed for charging and well charged battery boxes are installed onto the electric heavy-duty trucks.

### SUMMARY

Embodiments of this application provide an electrical connector assembly, a battery swapping base, and an electric apparatus, so as to prevent foreign matters and water from entering electrical connectors.

According to a first aspect, an embodiment of this application provides an electrical connector assembly. The electrical connector assembly includes: an electrical connector body for docking with a battery, where the electrical connector body has a docking portion that docks with the battery; a shield portion capable of shielding the docking portion; and a driving means capable of driving the shield portion to shield the docking portion and driving the shield portion to leave the docking portion.

In the foregoing technical solution, the electrical connector body can prevent, through shield of the shield portion, water or foreign matters from falling onto the docking portion of the electrical connector body during battery swapping which otherwise leads to short circuit or contamination of the docking portion.

In some embodiments, the shield portion includes a first shield plate and a second shield plate, the driving means is capable of driving the first shield plate and the second shield plate to close to shield the docking portion, and the first shield plate and the second shield plate each shield at least part of the docking portion.

In the foregoing technical solution, the first shield plate and the second shield plate close to shield the docking portion, which can not only implement shield on the docking portion, but also allow the shield portion not to occupy too much space.

In some embodiments, the electrical connector assembly further includes an adjusting portion, where when the driving means is driving the first shield plate and the second shield plate, the adjusting portion applies a force to one of the first shield plate and the second shield plate so that the first shield plate and the second shield plate are driven successively.

In the foregoing technical solution, through adjustment of the adjusting portion, the first shield plate and the second shield plate shield the docking portion without colliding with each other which otherwise causes poor closure, so as to avoid damage caused by such collision.

In some embodiments, the adjusting portion is a tension spring, one end of the tension spring being connected to the first shield plate or the second shield plate, and the other end of the tension spring being fastened on the electrical connector body.

In the foregoing technical solution, in the process of the driving means driving the first shield plate and the second shield plate to shield the docking portion, the tension spring pulls the first shield plate or the second shield plate so that the first shield plate and the second shield plate are driven successively. In addition, the tension spring is used as the adjusting portion at very low costs.

In some embodiments, the first shield plate and the second shield plate have parts that overlap each other in a closed state.

In the foregoing technical solution, the first shield plate and the second shield plate have parts that overlap each other in the closed state so that the docking portion is tightly shielded, making it more difficult for water or foreign matters to enter the electrical connector body.

In some embodiments, the first shield plate and the second shield plate are driven by the same driving means.

In the foregoing technical solution, the first shield plate and the second shield plate being driven by the same driving means can reduce complexity of the electrical connector assembly, space occupied by the driving means, and manufacturing costs.

In some embodiments, the driving means is a hydrocylinder, the hydrocylinder includes two opposite hydraulic rods, and the hydraulic rods are connected to the first shield plate and the second shield plate respectively.

In the foregoing technical solution, the hydrocylinder is used as the driving means by virtue of its small volume, simple arrangement, low costs, and easy availability. The hydrocylinder has two hydraulic rods capable of implementing fast closing or opening of the shield portion.

In some embodiments, the shield portion is driven to rotate around an axis so as to shield or leave the docking portion.

In the foregoing technical solution, the shield portion can rotate around the axis so as to quickly shield or leave the docking portion, and the axis can be set at a low position in a height direction of the electrical connector body, preventing the shield portion from interfering with the battery when the shield portion is leaving the docking portion.

In some embodiments, the shield portion includes a rotating portion capable of rotating around the axis, where the rotating portion includes a gear portion at the periphery, and the hydraulic rod drives a rack portion engaged with the gear portion, so as to drive the rotating portion to rotate.

In the foregoing technical solution, power generated by the driving means is easily transferred to the shield portion via the rotating portion, and the direction of the drive force of the hydraulic rod in a linear direction is changed by the gear portion and the rack portion, allowing more compact arrangement of the entire electrical connector assembly in a simple and easy-to-implement manner with small space occupied.

In some embodiments, the one end of the tension spring is fixedly connected to a rack portion corresponding to the first shield plate or the second shield plate.

In the foregoing technical solution, the tension spring is fixedly connected to the rack portion corresponding to the first shield plate or the second shield plate for applying force to the first shield plate or the second shield plate, so that when being driven by the driving portion, the first shield plate and the second shield plate are driven successively. Such structure features simple arrangement, easy implementation, and small space occupied.

In some embodiments, the shield portion has a flanging portion, and under the condition that the shield portion is shielding the docking portion, the flanging portion extends in a direction leaving the electrical connector body.

In the foregoing technical solution, the flanging portion can prevent water or foreign matters falling onto the shield portion from moving toward the electrical connector body, and can also guide the water falling onto the shield portion for the water to flow toward a side of the electrical connector body, further improving shield performance.

In some embodiments, the flanging portion includes a first flanging portion and a second flanging portion, and under the condition that the shield portion is shielding the docking portion, the first flanging portion and the second flanging portion are stacked in a height direction of the electrical connector body.

In the foregoing technical solution, the first flanging portion and the second flanging portion being stacked in the height direction of the electrical connector body can provide better blocking effect on foreign matters or water falling onto the shield portion.

In some embodiments, in the height direction of the electrical connector body, the shield portion in an open state is located at a position level with or lower than a connection surface where the battery docks with the electrical connector body.

In the foregoing technical solution, the shield portion in the open state does not come in contact with the battery so as not to hinder docking of the battery with the docking portion.

In some embodiments, the electrical connector assembly further includes a control portion, where the control portion implements such control that when the battery reaches a predetermined position during docking of the battery with the electrical connector body, the driving means drives the shield portion to leave the docking portion; or the control portion implements such control that when the battery reaches a predetermined position during undocking of the battery from the electrical connector body, the driving means drives the shield portion to shield the docking portion.

In the foregoing technical solution, the control portion can implement such control that the shield portion opens in time to implement docking when the battery and the docking portion are about to dock, and implement such control that the shield portion shields the docking portion in time when the battery and the docking part is about to undock, so as to prevent water or foreign matters from falling onto the electrical connector body.

According to a second aspect, an embodiment of this application provides a battery swapping base including a plurality of electrical connector assemblies according to the first aspect.

According to a third aspect, an embodiment of this application provides an electric apparatus including the electrical connector assembly according to the first aspect or the battery swapping base according to the second aspect.

It should be understood that the foregoing general description and the following detailed description are only exemplary and are not intended to limit this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a three-dimensional diagram of an electrical connector assembly being in a closed state according to some embodiments of this application;
FIG. 2 is a three-dimensional diagram of an electrical connector assembly being in an open state according to some embodiments of this application;
FIG. 3 is a side view of an electrical connector assembly being in a closed state according to some embodiments of this application;
FIG. 4 is a side view of an electrical connector assembly being in an open state according to some embodiments of this application;
FIG. 5 is an enlarged view of region X in FIG. 3; and
FIG. 6 is a three-dimensional diagram of a battery swapping base according to some embodiments of this application.

The accompanying drawings are not drawn to scale.

Reference signs: electrical connector assembly 100; electrical connector body 1; docking portion 10; mounting portion 11; support 12; shield portion 20; driving means 30; first shield plate 21; second shield plate 22; front edge 211 of first shield plate; front edge 221 of second shield plate; adjusting portion 40; cylinder 31; hydraulic rod 32; first rotating portion 212; first gear portion 213; first rack portion 214; second rotating portion 222; second gear portion 223; second rack portion 224; first flanging portion 215; second flanging portion 225; battery swapping base 1000; frame 200; guide means 300; first guide post 301; second guide post 302; axis L; and connection surface A.

The accompanying drawings herein are incorporated into this specification and form a part of this specification. They illustrate embodiments conforming to this application and are intended to explain the principles of this application together with this specification.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated apparatuses in the embodiments of this application are merely for illustrative purposes and should not constitute any limitations on this application.

In this application, "a plurality of" means more than two (inclusive).

Currently, heavy-duty trucks typically have their batteries swapped at dedicated battery swapping stations, at which battery swapping bases are used. The battery swapping base is provided with an electrical connector for docking with a battery so as to complete charging and/or discharging.

The applicant has found that the electrical connector itself has a complex shape and also has many electronic components inside. Therefore, foreign matters and dust falling therein are prone to contaminate the electrical connector and are difficult to be cleaned. In addition, water falling therein is likely to lead to short circuit inside the electrical connector, thus damaging the electrical connector. Electric heavy-duty trucks have severe driving environments, resulting in much dust and rain often attaching to their batteries. Therefore, when a battery of an electric heavy-duty truck is being swapped, substances attaching on the battery tend to fall onto an electrical connector.

In view this, this application provides a technical solution in which a structure of an electrical connector is improved to prevent water or foreign matters from falling onto the electrical connector during battery swapping, so as to avoid short circuit or contamination of the electrical connector.

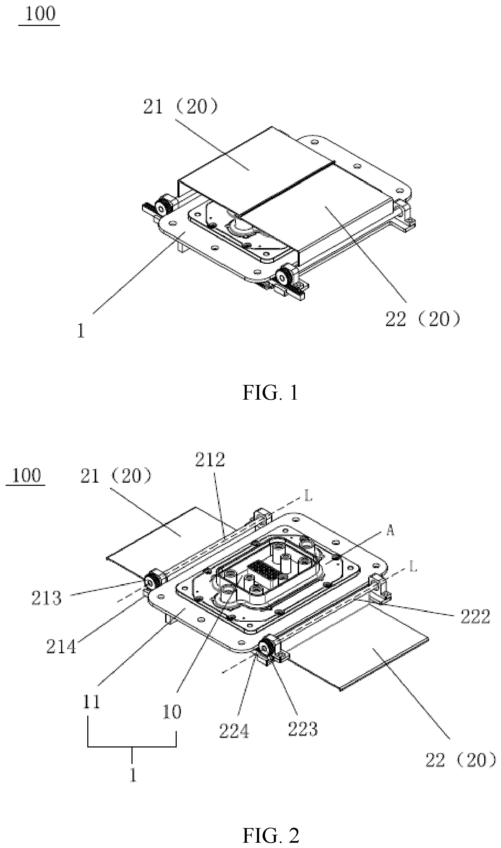

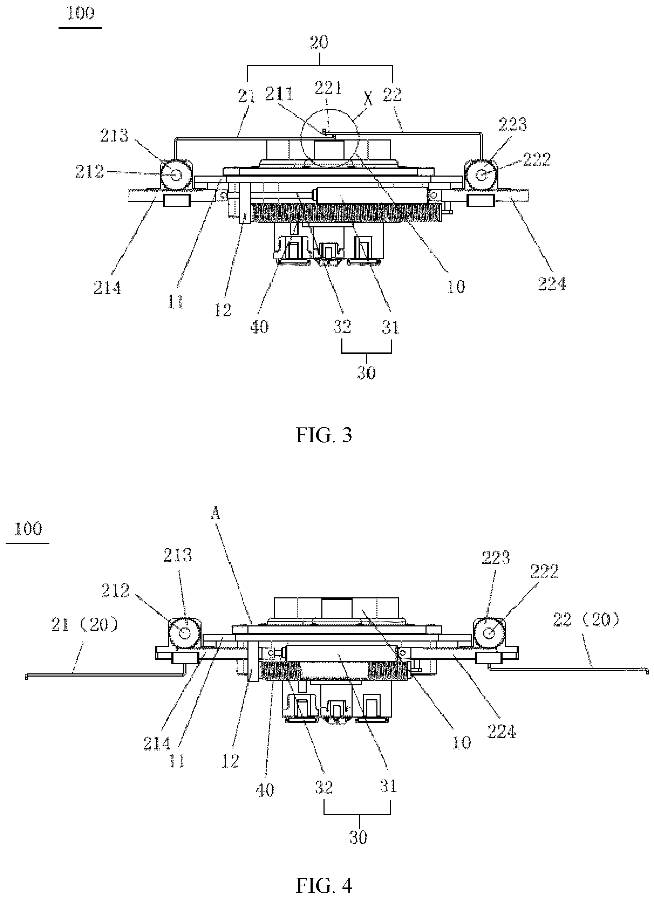

FIG. 1 is a three-dimensional diagram of an electrical connector assembly 100 in a closed state according to some embodiments of this application. FIG. 2 is a three-dimensional diagram of an electrical connector assembly 100 in an open state according to some embodiments of this application. FIG. 3 is a side view of an electrical connector assembly 100 in a closed state according to some embodiments of this application. FIG. 4 is a side view of an electrical connector assembly 100 in an open state according to some embodiments of this application.

In some embodiments, as shown in FIG. 1 to FIG. 4, the electrical connector assembly 100 includes an electrical connector body 1 for docking with a battery (not shown in the figures). The electrical connector body 1 has a docking portion 10 that docks with the battery. The electrical connector assembly 100 further includes a shield portion 20 and a driving means 30. The shield portion 20 can shield the docking portion 10. The driving means 30 is capable of driving the shield portion 20 to shield the docking portion 10 and driving the shield portion 20 to leave the docking portion 10.

In some embodiments, the electrical connector body 1 further includes a mounting portion 11 for mounting the electrical connector body 1 on a battery swapping base. The docking portion 10 is disposed on the mounting portion 11. After docking with the docking portion 10, the battery can be charged or discharged.

As shown in FIG. 1 and FIG. 3, the driving means 30 can drive the shield portion 20 to be in a closed state so that the shield portion 20 shields the docking portion 10. As shown in FIG. 2 and FIG. 4, the driving means 30 can drive the shield portion 20 to be in an open state so that the shield portion 20 is away from the docking portion 10.

During battery swapping, a clamp is typically used to clamp a battery box, move the battery box horizontally above the battery swapping base, and start to lower the battery box when reaching a predetermined position, so as to dock with the docking portion 10 of the electrical connector body 1 disposed on the battery swapping base. In this process, water or foreign matters on the battery box tend to fall onto the docking portion 10, leading to contamination and/or short circuit of the electrical connector body 1. Referring to FIG. 1 to FIG. 4, in some embodiments of this application, the shield portion 20 being driven by the driving means 30, during movement of the battery above the electrical connector body 1, the driving means 30 drives the shield portion 20 to shield the docking portion 10, which can prevent foreign matters and/or water on the battery from falling onto the electrical connector body 1. When the battery reaches the predetermined position and is ready to be lowered to dock with the docking portion 10, the driving means 30 drives the shield portion 20 to leave the docking portion 10 so that the battery successfully docks with the docking portion 10.

In some embodiments, as shown in FIG. 3 and FIG. 4, the shield portion 20 includes a first shield plate 21 and a second shield plate 22. The driving means 30 can drive the first shield plate 21 and the second shield plate 22 to close to shield the docking portion 10. The first shield plate 21 and the second shield plate 22 each shield at least part of the docking portion 10.

Specifically, as shown in FIG. 3, the driving means 30 can drive the first shield plate 21 and the second shield plate 22 to close toward the middle of the docking portion 10, and in the closed state, as shown in FIG. 3, the first shield plate 21 shields the left half of the docking portion 10 and the second shield plate 22 shields the right half of the docking portion 10, to ensure that no foreign matters and/or water falls onto the docking portion 10. As shown in FIG. 4, the driving means 30 can also drive the first shield plate 21 and the second shield plate 22 to open toward two sides of the docking portion 10, so that the docking portion 10 is fully exposed for docking with the battery.

The first shield plate 21 and the second shield plate 22 close to shield the docking portion 10, which can not only implement shield on the docking portion 10, but also allow the shield portion 20 not to occupy too much space no matter whether the shield portion 20 is in the open state, in the closed state, or in the opening or closing process. However, this application is not limited to this implementation, but may further include an implementation in which only one shield plate is used to shield the docking portion 10, or more than two shield plates are used to shield the docking portion 10, or another shield structure is used to shield the docking portion. In addition, although in the closed state shown in FIG. 3, the first shield plate 21 and the second shield plate 22 shield the docking portion 10 from above, or two side edges, perpendicular to the paper of FIG. 3, of the first shield plate 21 and the second shield plate 22 in FIG. 3 may be made to extend toward the docking portion 10 (lower part in FIG. 3) to shield the docking portion 10 from the side, so that the first shield plate 21 and the second shield plate 22 can shield the docking portion 10 from multiple directions, thus providing better shield.

In some embodiments, as shown in FIG. 3, the first shield plate 21 and the second shield plate 22 have parts that overlap each other in the closed state. To be specific, in the closed state, a front edge 211 of first shield plate 21 and a front edge 221 of second shield plate 22 overlap in a height direction of the electrical connector body 1 (that is, the vertical direction in FIG. 3). In this way, the first shield plate 21 and the second shield plate 22 provide better shield for the docking portion 10, making it more difficult for water or foreign matters to enter the docking portion 10.

In some embodiments, as shown in FIG. 2 and FIG. 4, in a height direction of the electrical connector body 1 (that is, the vertical direction in FIG. 4), the shield portion 20 in an open state is located at a position level with or lower than a connection surface A where the battery docks with the electrical connector body 1. In this way, the shield portion 20 in the open state does not come in contact with the battery so as not to hinder docking of the battery with the docking portion 10. Herein, the connection surface refers to the lowest position of the battery in the height direction of the electrical connector body 1 after the battery has docked with the docking portion 10.

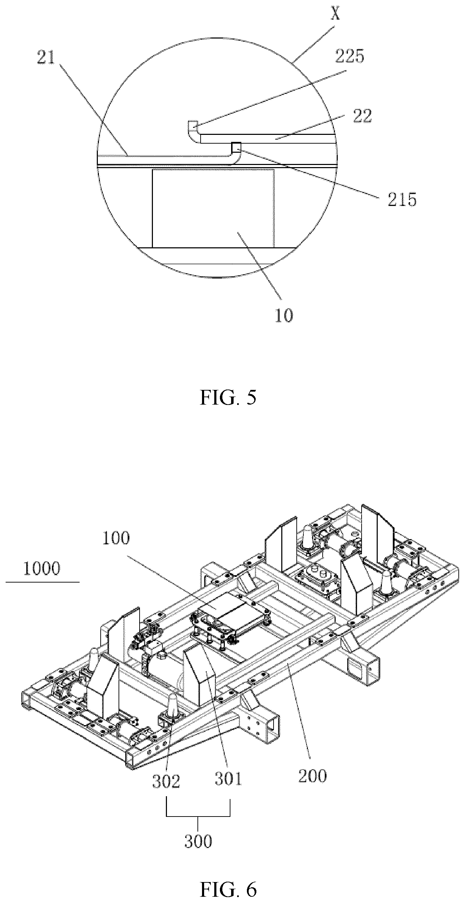

In some embodiments, as shown in FIG. 3 and FIG. 4, the electrical connector assembly 100 further includes an adjusting portion 40. When the driving means 30 is driving the first shield plate 21 and the second shield plate 22, the adjusting portion 40 applies a force to one of the first shield plate 21 and the second shield plate 22 so that the first shield plate 21 and the second shield plate 22 are driven successively. For example, in the open state shown in FIG. 5, when the driving means 30 is driving the first shield plate 21 and the second shield plate 22 to close, the adjusting portion 40 applies a force to the second shield plate 22 to make the driving force of the driving means 30 to the second shield plate 22 and the force applied by the adjusting portion 40 to the second shield plate 22 counteract or at least partially counteract each other, so that the second shield plate 22 does not move or moves slowly, while the first shield plate 21 can be driven to close ahead of the second shield plate 22 because the first shield plate 21 is subjected to only the driving force of the driving means 30. In addition, to switch from the closed state back to the open state shown in FIG. 5, the driving means 30 drives the first shield plate 21 and the second shield plate 22 to open, and the adjusting portion 40 applies a force to the second shield plate 22 to make the driving force of the driving means 30 to the second shield plate 22 and the force applied by the adjusting portion 40 to the second shield plate 22 be superposed, so that the second shield plate 22 is driven to open first, while the first shield plate 21 is driven to open later than the second shield plate 22 because the first shield plate 21 is subjected to only the driving force of the driving means 30 and does not move temporarily or moves slowly relative to the second shield plate 22.

Through adjustment of the adjusting portion 40, the first shield plate 21 and the second shield plate 22 are driven successively in the process of shielding the docking portion 10. The first shield plate 21 and the second shield plate 22 are not driven at the same time. The front edge 211 of the first shield plate 21 and the front edge 221 of the second shield plate 22 do not collide with each other which otherwise leads to poor closure or collision and damage of the front edge.

In some embodiments, as shown in FIG. 3 and FIG. 4, the adjusting portion 40 is a tension spring, one end of the tension spring being connected to the first shield plate 21 or the second shield plate 22, and the other end of the tension spring being fastened on the electrical connector body 1. For example, the mounting portion 11 of the electrical connector body 1 is provided with a support 12, one end of the tension spring is connected to the electrical connector body 1 by being mounted on the support 12, and the other end of the tension spring is connected to the second shield plate 22. In this way, the tension spring can apply a tensile force to the second shield plate 22 opposite to the driving force of the driving means 30, and pull the second shield plate 22 for the second shield plate 22 to be driven later than the first shield plate 21 when the driving means 30 is driving the second shield plate 22 to close. When the driving means 30 is driving the second shield plate 22 to open, the tension spring can apply a tensile force to the second shield plate 22 in the same direction as the driving force of the driving means so that the second shield plate 22 is driven ahead of the first shield plate 21.

The tension spring has a simple structure and is easily available. The tension spring used as the adjusting portion 40 has very low costs, occupies small space, and thus is easy to be disposed in the electrical connector assembly 100. However, this application is not limited to this implementation. For example, the adjusting portion 40 may alternatively be a limiting means. In the closing process, the limiting means limits the second shield plate 22 so that the second shield plate 22 is unable to move until the first shield plate 21 completes closing, and then the limit on the second shield plate 22 is released for the second shield plate 22 to closes. In the opening process, the limiting means limits the first shield plate 21 so that the first shield plate 21 is unable to move and the second shield plate 22 opens first or until the second shield plate 22 completely opens, and then the limiting means release the limit on the first shield plate 21 so that the first shield plate 21 opens.

In some embodiments, as shown in FIG. 3 and FIG. 4, the first shield plate 21 and the second shield plate 22 are driven by the same driving means 30. For example, the driving means 30 is connected to both the first shield plate 21 and the second shield plate 22, and when driving, the driving means 30 drives the first shield plate 21 and the second shield plate 22 in opposite directions. In this way, complexity of the electrical connector assembly, space occupied by the driving means, and manufacturing costs can be reduced. Certainly, the first shield plate 21 and the second shield plate 22 may alternatively be driven by different driving means.

In some embodiments, as shown in FIG. 3 and FIG. 4, the driving means 30 is a hydrocylinder, the hydrocylinder includes a cylinder 31 and a hydraulic rod 32, and the cylinder 31 and the hydraulic rod 32 are connected to the first shield plate 21 and the second shield plate 22 respectively. For example, the hydraulic rod 32 is connected to the first shield plate 21, and the cylinder 31 is connected to the second shield plate 22. When the hydraulic cylinder is driving, the hydraulic rod 32 extends out, the hydraulic rod 32 drives the first shield plate 21, and the cylinder 31 drives the second shield plate 22. In addition, the driving means 30 may alternatively be an air cylinder, an electric cylinder, an electric push rod, or the like.

In some embodiments, the hydrocylinder includes two opposite hydraulic rods, and the hydraulic rods are connected to the first shield plate 21 and the second shield plate 22 respectively. The hydrocylinder with two hydraulic rods allows faster closing or opening of the shield portion.

The hydrocylinder is small, simple to arrange, and easily available at low costs, and therefore is preferably used as the driving means 30.

In some embodiments, the shield portion 20 is driven to rotate around an axis L so as to shield or leave the docking portion 10. For example, as shown in FIG. 2, the first shield plate 21 and the second shield plate 22 are driven by the driving means 30 to rotate around the axis L. The axises L are set on two sides of the electrical connector body 1. In this way, the first shield plate 21 and the second shield plate 22 can rotate around the axis L so as to quickly shield or leave the docking portion 10, and the axis L can be set at a low position in a height direction of the electrical connector body 1, preventing the shield portion 20 from interfering with the battery when the shield portion 20 is leaving the docking portion.

In some embodiments, as shown in FIG. 2, the shield portion 20 includes a rotating portion (for example, a first rotating portion 212 and a second rotating portion 222) capable of rotating around the axis L, where the rotating portion includes a gear portion (for example, a first gear portion 213 and a second gear portion 223) at the periphery, and the hydraulic rod 32 drives the rotating portion to rotate by driving a rack portion (for example, a first rack portion 214 and a second rack portion 224) engaged with the gear portion.

For example, as shown in FIG. 3 and FIG. 4, the hydraulic rod 32 is connected to the first rack portion 214. When extending out, the hydraulic rod 32 pushes the first rack portion 214 out to drive the first gear portion 213 engaged with the first rack portion 214 to rotate, with the first rotating portion 212 as a rotating shaft and the first gear portion 213 fastened on the first rotating portion 212. Therefore, when rotating, the first gear portion 213 drives the first rotating portion 212 to rotate simultaneously, and the first shield plate 21 flips in a direction of closing to shield the docking portion 10. When retracting, the hydraulic rod 32 pulls the first rack portion 214 back to drive the first gear portion 213 engaged with the first rack portion 214 to rotate reversely and in turn drive the first rotating portion 212 to rotate simultaneously, and the first shield plate 21 flips in a direction leaving the docking portion 10.

Similarly, the second shield plate 22 also flips via a gear portion, rack portion, and rotating portion of the same structures. For example, the cylinder 31 is connected to the second rack portion 224. When the hydraulic rod 42 extends out, the cylinder 31 pushes the second rack portion 224 out to drive the second gear portion 223 engaged with the second rack portion 224 to rotate, with the second rotating portion 222 as a rotating shaft and the second gear portion 223 fastened on the second rotating portion 222. Therefore, when rotating, the second gear portion 223 drives the second rotating portion 222 to rotate simultaneously, and the second shield plate 22 flips in a direction of closing to shield the docking portion 10. When the hydraulic rod 32 retracts, the cylinder 31 pulls the second rack portion 224 back to drive the second gear portion 223 engaged with the second rack portion 224 to rotate reversely and in turn drive the second rotating portion 222 to rotate simultaneously, and the second shield plate 22 flips in a direction leaving the docking portion 10.

The gear portion, the rack portion, and the rotating portion provided, the driving means 30 can be converted from driving in the linear direction to driving rotation of the shield portion 20, so that the driving means 30, the adjusting means 40, the first rack portion 214, and the second rack portion 224 can all be disposed under the connection surface A, and that the first rotating portion 212, the first gear portion 213, the second rotating portion 222, and the second gear portion 223 can all be disposed on the side of the electrical connector body 1. This makes the electrical connector assembly 100 have compact structure and prevents movement of the shield portion 20 from interfering with the docking of the battery with the docking portion 10.

In some embodiments, as shown in FIG. 3 and FIG. 4, one end of the adjusting portion (tension spring) 40 is fixedly connected to the rack portion corresponding to the first shield plate 21 or the second shield plate 22. For example, one end of the tension spring is mounted on the support 12, and the other end of the tension spring is fixedly connected to the second rack portion 224 corresponding to the second shield plate 22. In this way, during closing of the shield portion 20, the cylinder 31 drives the second rack portion 224 to extend out, and the tension spring applies a tensile force to the second rack portion 224. The driving force applied by the cylinder 31 to the second rack portion 224 is in reverse to the tensile force applied by the tension spring to the second rack portion 224, so that the forces counteract each other and the second shield plate 22 does not move temporarily. At this point, the first rack portion 214 driven by the hydraulic rod 32 drives the first shield plate 21 to flip first to shield the docking portion 10. When the first shield plate 21 flips in place, because the first rack portion 214 is unable to extend any longer, under the action of the driving means 30, the cylinder 31 continues to push the second rack portion 224, the force applied by the tension spring is not enough to continue to limit the movement of the second rack portion 224, and ultimately the second shield plate 22 also flips to shield the docking portion 10. During opening of the shield 20, the cylinder 31 drives the second rack portion 224 to retract, and the second rack portion 224 is also subjected to the tensile force of the tension spring. Under both the driving force and the tensile force, the second shield plate 22 is driven to flip away from the docking portion 10 ahead of the first shield plate 21.

In some embodiments, referring to FIG. 5, FIG. 5 is an enlarged view of region X in FIG. 3. The shield portion 20 has a flanging portion, and under the condition that the shield portion 20 is shielding the docking portion 10, the flanging portion extends in a direction leaving the electrical connector body 1. For example, as shown in FIG. 5, the first shield plate 21 has a first flanging portion 215 extending in a direction leaving the electrical connector body 1, and the second shield plate 22 has a second flanging portion 225 extending in a direction leaving the electrical connector body 1. In this way, when foreign matters or water falls onto the first shield plate 21 or the second shield plate 22, due to blocking of the first flanging portion 215 and the second flanging portion 225, the foreign matters or water does not fall onto the docking portion 10 through a gap between the first shield plate 21 and the second shield plate 22. In addition, the first flanging portion 215 and the second flanging portion 225 can also guide the water falling onto the first shield plate 21 or the second shield plate 22 so that the water flows toward the side of the electrical connector body 1, further improving shield performance of the shield portion 20. It should be noted that the flanging portion may alternatively extend toward the electrical connector body (that is, lower part in FIG. 5), which can also provide some shield.

In some embodiments, the flanging portion includes a first flanging portion 215 and a second flanging portion 225, and under the condition that the shield portion 20 is shielding the docking portion 10, the first flanging portion 215 and the second flanging portion 225 are stacked in the height direction of the electrical connector body 1.

The first flanging portion 215 and the second flanging portion 225 are stacked in the height direction of the electrical connector body 1, for example, both the first flanging portion 215 and the second flanging portion 225 are folded in a direction leaving the docking portion 10, so as to further improve blocking of foreign matters or water in the height direction of the electrical connector body 1, effectively block foreign matters or water falling onto the shield portion, and reduce the probability of the foreign matters or water falling onto the docking portion 10.

In some embodiments, the electrical connector assembly 100 further includes a control portion, where the control portion implements such control that when the battery reaches a predetermined position during docking of the battery with the electrical connector body 1, the driving means drives the shield portion 20 to leave the docking portion 10; or the control portion implements such control that when the battery reaches a predetermined position during undocking of the battery from the electrical connector body 1, the driving means drives the shield portion 20 to shield the docking portion 10.

The control portion can determine whether the battery reaches a predetermined position based on a position in which a clamp clamping the battery is located. For example, during docking of the battery with the electrical connector body 1, the clamp clamps the battery and moves the battery horizontally above a battery swapping base. When the battery is moved to a predetermined position, for example, moved to the position where the electrical connector body 1 can shield the top of the docking portion 10, water and foreign matters on the battery will not fall onto the docking portion 10. At this point, the control portion controls the driving means 30 to drive the shield portion 20 to leave the docking portion 10 so that the battery successfully docks with the docking portion 10. More preferably, when the clamp clamping the battery moves to right above the electrical connector body 1 and the battery is about to be lowered to dock with the electrical connector body 1, the driving means 30 is controlled to drive the shield portion 20 to open. In addition, when the battery is moved to a predetermined position during undocking of the battery from the electrical connector body 1, for example, when the clamp clamps the battery to move upward to be separated from the docking portion 10 and rises to a certain height or moves horizontally until the docking portion 10 can no longer be shielded, there is a risk of water and foreign matters on the battery falling onto the docking portion 10. At this point, the control portion controls the driving means 30 to drive the shield portion 20 to shield the docking portion 10 to protect the docking portion 10. More preferably, when the clamp rises to the height at which the battery is about to be lowered during docking described above and is about to move the battery horizontally to leave the battery swapping base, the driving means is controlled to drive the shield portion to close.

FIG. 6 is a three-dimensional diagram of a battery swapping base 1000 according to some embodiments of this application.

This application further provides a battery swapping base 1000 including the foregoing electrical connector assembly 100. For example, as shown in FIG. 6, the battery swapping base 1000 is used for battery swapping of electric heavy-duty tracks. The battery swapping base 1000 includes a frame 200, and the frame 200 is provided with several guide means 300, for example, a first guide post 301 and a second guide post 302. The electrical connector assembly 100 is fastened on the frame 200. The battery is provided with docking holes corresponding to the guide means 300 and a battery docking portion that docks with the docking portion 10 of the electrical connector assembly 100. Before the battery docking portion docks with the docking portion 10 of the electrical connector assembly 100, the battery is first guided and positioned through the guide means 300 and the docking holes on the battery, for example, rough positioning through the first guide post 301 and precise positioning through the second guide post 302, so that the battery is accurately and firmly placed on the battery swapping base 1000 to achieve accurate docking with the docking portion 10 of the electrical connector assembly 100.

This application further provides an electric apparatus including the foregoing electrical connector 100 or the foregoing battery swapping base 1000.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. An electrical connector assembly, comprising:
an electrical connector body for docking with a battery, wherein the electrical connector body has a docking portion that docks with the battery;
a shield portion capable of shielding the docking portion; and
a driving means capable of driving the shield portion to shield the docking portion and driving the shield portion to leave the docking portion.

2. The electrical connector assembly according to claim 1, wherein
the shield portion comprises a first shield plate and a second shield plate, the driving means is capable of driving the first shield plate and the second shield plate to close to shield the docking portion, and the first shield plate and the second shield plate each shield at least part of the docking portion.

3. The electrical connector assembly according to claim 2,
further comprising an adjusting portion, wherein when the driving means is driving the first shield plate and the second shield plate, the adjusting portion applies a force to one of the first shield plate and the second shield plate so that the first shield plate and the second shield plate are driven successively.

4. The electrical connector assembly according to claim 3, wherein
the adjusting portion is a tension spring, one end of the tension spring being connected to the first shield plate or the second shield plate, and the other end of the tension spring being fastened on the electrical connector body.

5. The electrical connector assembly according to any one of claims 2 to 4, wherein
the first shield plate and the second shield plate have parts that overlap each other in a closed state.

6. The electrical connector assembly according to any one of claims 2 to 5, wherein
the first shield plate and the second shield plate are driven by the same driving means.

7. The electrical connector assembly according to any one of claims 1 to 6, wherein
the shield portion is driven to rotate around an axis so as to shield or leave the docking portion.

8. The electrical connector assembly according to claim 7, wherein the shield portion comprises a rotating portion capable of rotating around the axis, wherein the rotating portion comprises a gear portion at the periphery, and the hydraulic rod drives a rack portion engaged with the gear portion, so as to drive the rotating portion to rotate.

9. The electrical connector assembly according to claim 8, wherein the one end of the tension spring is fixedly connected to a rack portion corresponding to the first shield plate or the second shield plate.

10. The electrical connector assembly according to any one of claims 1 to 9, wherein
the shield portion has a flanging portion, and under the condition that the shield portion is shielding the docking portion, the flanging portion extends in a direction leaving the electrical connector body.

11. The electrical connector assembly according to claim 10, wherein
the flanging portion comprises a first flanging portion and a second flanging portion, and under the condition that the shield portion is shielding the docking portion, the first flanging portion and the second flanging portion are stacked in a height direction of the electrical connector body.

12. The electrical connector assembly according to any one of claims 1 to 11, wherein
in the height direction of the electrical connector body, the shield portion in an open state is located at a position level with or lower than a connection surface where the battery docks with the electrical connector body.

13. The electrical connector assembly according to any one of claims 1 to 12,
further comprising a control portion, wherein the control portion implements such control that when the battery reaches a predetermined position during docking of the battery with the electrical connector body, the driving means drives the shield portion to leave the docking portion; or
the control portion implements such control that when the battery reaches a predetermined position during undocking of the battery from the electrical connector body, the driving means drives the shield portion to shield the docking portion.

14. A battery swapping base, comprising the electrical connector assembly according to any one of claims 1 to 13.

15. An electric apparatus, comprising the electrical connector assembly according to any one of claims 1 to 13 or the battery swapping base according to claim 14.
